# EUROPEAN PATENT SPECIFICATION

(11) **EP 0 364 294 B1**
(45) Date of publication and mention of the grant of the patent: **12.05.1993**
(21) Application number: 89310537.9
(22) Date of filing: 13.10.1989
(51) Int. Cl.: A44B 19/42, A44B 19/34

(54) **Method for producing curved slide fastener chains and method for producing curved slide fasteners**
Verfahren zur Herstellung einer bogenförmigen Reissverschlusskette und Verfahren zur Herstellung eines bogenförmigen Reissverschlusses
Procédé de fabrication de chaînes de fermetures à glissière courbes et procédé de fabrication de fermetures à glissière courbes

(30) Priority: 14.10.1988 JP 257300/88
(43) Date of publication of application: 18.04.1990
(73) Proprietor: YOSHIDA KOGYO K.K., Chiyoda-ku, Tokyo (JP)
(72) Inventor: Takada, Shigeki, Kurobe-shi Toyama-ken (JP)
(74) Representative: White, Martin David

(56) References cited:
- EP-A- 0 111 233
- GB-A- 129 622
- US-A- 2 744 313
- US-A- 3 003 212
- US-A- 3 725 983
- US-A- 3 925 858

## Description

The present invention relates to a method for producing curved slide fasteners which are used as sewed on bags, children bags, pocket portions of cloths, etc. and also to a method for producing curved slide fastener chains used as preparatory products for the former.

### Description of the Prior Art:

Heretofore, in the production of curved slide fasteners, in the case of metallic fasteners it has been practiced that a pitch (interval) between the respective fastener elements planted on one side edge of one fastener tape is chosen large, while a pitch of the respective fastener elements planted on one side edge of the other fastener tape is chosen small, and thereby a curved inter-engaged portion is formed by the difference of pitches (for instance, see Laid-Open Japanese Patent Specification No. 59-103607 (1984), corresponding to EP-A-0 111 233). Also, in the case of coil fasteners it has been practiced to form a curved configuration by heating with a heater. Furthermore, as methods other than the above-described method, a method of cutting slits in a fastener tape portion and then sewing it on cloths or a method of using left and right fastener tapes having different widths has been practiced.

However, in the case of the above-described method of forming a curved inter-engaged portion by the difference of pitches, the production was complicated and expensive in cost, and the methods of making use of a heater, cutting slits in the fastener tape portion, and using left and right fastener tapes having different widths, involved problems such that generally it was difficult to shape into a desired curved configuration and sewing thereof was troublesome.

EP-A-0 111 233, on which the preamble of claim 1 is based, discloses a method of producing a curved slide fastener chain, comprising the steps of:- planting a plurality of fastener elements along respective side edges of a pair of fastener tapes; and inter-engaging the plurality of fastener elements on the respective tapes with each other to form a slide fastener chain.

EP-A-0 111 233 also discloses a method of producing a curved slide fastener. The method comprises the steps of: producing a slide fastener chain as described above; and mounting parts such as a slider, upper stops and/or lower stops on the slide fastener chain so as to form a slide fastener having a predetermined length.

However, in the slide fastener chain and slide fastener disclosed in EP-A-0 111 233, the fastener elements of the two fastener tapes are not inter-engaged in a curved portion of the slide fastener chain or slide fastener.

### SUMMARY OF THE INVENTION

It is, accordingly, one aim of the present invention to provide a method of producing curved slide fastener chains and curved slide fasteners which can be simply shaped into a desired curved configuration (into a curved portion having a desired curvature) and can be easily sewed.

Another aim of the present invention is to provide a method of producing curved slide fastener chains and curved slide fasteners which can be simply shaped into a desired curved configuration arbitarily at the place of sewing upon sewing work.

According to a first aspect of the present invention there is provided a method of producing a curved slide fastener chain, comprising the steps of:- planting a plurality of fastener elements along respective side edges of a pair of fastener tapes; and inter-engaging the plurality of fastener elements on the respective tapes with each other to form a slide fastener chain;
said method being characterised in that at least one of said fastener tapes is made at least partly of solvent-swelling fibers; and in that it further comprises the steps of:- applying a solvent or an aqueous solution containing a solvent onto said fastener tape made at least partly from solvent-swelling fibers or onto one or both of said fastener tapes made at least partly from solvent-swelling fibers; shaping said slide fastener chain into a curved configuration; and sewing the curved slide fastener chain onto a textile material.

Further, according to the present invention there is provided a method of producing a curved slide fastener chain, comprising the steps of:- planting a plurality of fastener elements along respective side edges of a pair of fastener tapes; and inter-engaging the plurality of fastener elements on the respective tapes with each other to form a slide fastener chain;
said method being characterised in that at least one of said fastener tapes is made at least partly of solvent-swelling fibers; in that it further comprises the steps of:- applying a solvent or an aqueous solution containing a solvent onto said fastener tape made at least partly from solvent-swelling fibers or onto one or both of said fastener tapes made at least partly from solvent-swelling fibers; shaping said slide fastener chain into a curved configuration; and in that an adhesive is dissolved in said solvent or said aqueous solution containing a solvent.

Further, according to the present invention there is provided a method of producing a curved slide fastener chain, comprising the steps of:- planting a plurality of fastener elements along respective side edges of a pair of fastener tapes; and inter-engaging the plurality of fastener elements on the respective tapes with each other to form a slide fastener chain;
said method being characterised in that at least one of said fastener tapes is made at least partly of solvent-swelling fibers; and in that it further comprises the steps of:-
applying a solvent or an aqueous solution containing a solvent onto said fastener tape made at least partly from solvent-swelling fibers or onto one or both of said fastener tapes made at least partly from solvent-swelling fibers; shaping said slide fastener chain into a curved configuration; and applying an adhesive onto at least one of said fastener tapes once said slide fastener chain has been shaped into said curved configuration.

According to a second aspect of the present invention there is provided a method of producing a curved slide fastener, including the steps of mounting a slider and one or more upper and/or lower stops on a slide fastener chain produced by any of the above methods, as set out in independent claims 4,5, and 6. Particular embodiments of the invention are set out in dependent claims 7,8.

In the method according to the present invention, a slide fastener or a slide fastener chain is formed into a curved configuration by making use of the property that solvent-swelling synthetic fibers (for instance, polyurethane fibers) would swell (expand) upon treatment with a solvent. In more particular, by applying a solvent onto a tape portion of a fastener stringer on one side of a slide fastener chain making use of a fastener tape in which polyurethane fibers are woven in the direction of warps, only the fastener tape on that one side would elongate in the warp direction as the polyurethane fibers expands, and as a result, the slide fastener chain can be shaped into a curved configuration in an extremely simple manner.

The above-mentioned and other aims, features and advantages of the present invention will become more apparent by reference to the following detailed description of the invention taken in conjunction with the accompanying drawings.

### BRIEF DESCRIPTION OF THE DRAWINGS

In the accompanying drawing consisting of only one sheet:
Figs. 1A to 1E are schematic views showing successive steps of one method according to the present invention; and
Fig. 2 is a schematic view showing the mode of chain bias measurement.

### DETAILED DESCRIPTION OF THE INVENTION

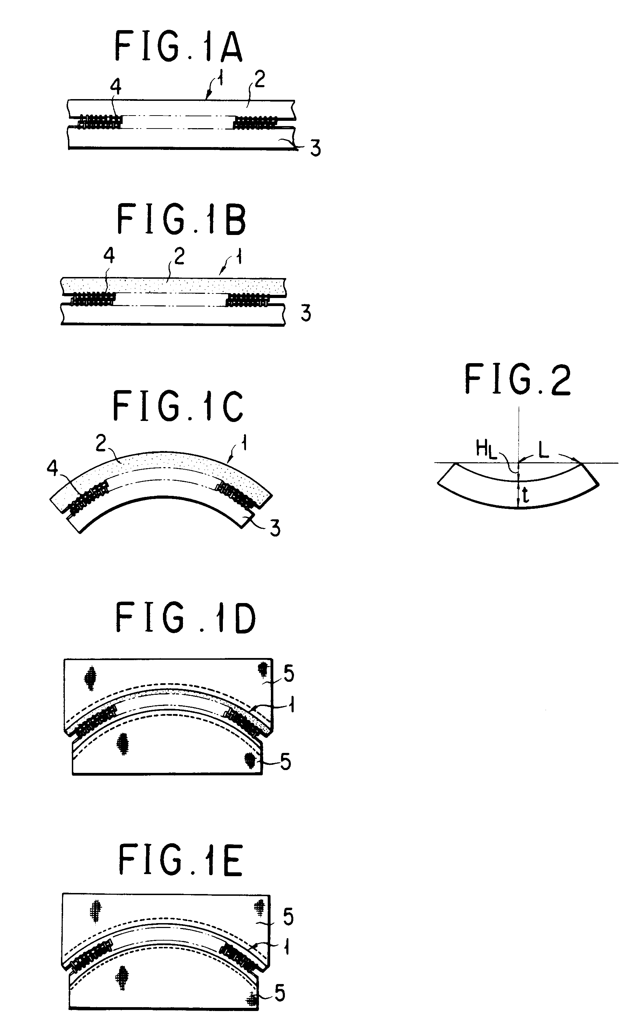

In the following, the method according to the present invention will be described in greater detail with reference to Figs. 1A to 1E, which illustrate the successive steps in the method of producing a curved slide fastener chain. In these figures, reference numerals 2 and 3 designate fastener tapes in which polyurethane fibers, which are solvent-swelling fibers, are woven in the direction of warps, a plurality of fastener elements 4 are planted along one side edges of the pair of fastener tapes 2 and 3, and these plurality of fastener elements are interengaged to form a fastener chain 1 (See Fig. 1A). It is to be noted that in the drawing a fastener chain of unit length is illustrated. Subsequently, among the above-mentioned pair of fastener tapes 2 and 3, onto one fastener tape 2 or onto the both fastener tapes 2 and 3 is applied a solvent or its aqueous solution through any appropriate method such as spraying, brush-painting or the like. For convenience of explanation, in Fig. 1B illustration is made for the case where a solvent has been applied onto one of fastener tapes, for instance, onto the fastener tape 2, and the applied portion is indicated by shading. After a while (normally about several seconds), the polyurethane fiber yarns would expand (swell), and so, the fastener chain 1 can be easily shaped into a predetermined curved configuration (See Fig. 1C). Subsequently, in order to fix this curved configuration, this fastener chain 1 shaped into a predetermined curved configuration is sewed onto a texture/textile 5 (See Fig. 1D). If the fastener chain is held under this condition for a while, the solvent impregnated in the fastener tape 2 would evaporate, and thus a curved slide fastener chain having a predetermined curved configuration can be obtained (See Fig. 1E). The curvature of the curve of the curved slide fastener chain can be arbitrarily adjusted by appropriately selecting the amount of application of the solvent and the kinds of the solvent. Furthermore, as will be apparent from the above description, the method according to the present invention is applicable so long as among a pair of fastener tapes at least one tape is made of solvent-swelling fibers.

While fixation by sewing was illustrated in Figs. 1A to 1E, a method of employing a resin adhesive and fixing by curing of resin is also possible. More particularly, in a second method according to the present invention, among a pair of fastener tapes, onto either one fastener tape made of solvent-swelling fibers is applied a solution containing a solvent and dissolving a soluble adhesive, thus the fastener chain is shaped into a predetermined curved configuration by making use of expansion (swelling) of the fastener tape caused by the solvent, and thereafter as a result of solidification of the adhesive after evaporation of the solvent, a curved slide fastener chain solidified in the aforementioned predetermined curved configuration can be obtained. In addition, in a third method according to the present invention, after a fastener chain has been shaped into a predetermined curved configuration through the steps illustrated in Figs. 1A to 1C, by applying an adhesive onto the fastener tape 2 to fix it, a curved slide fastener chain can be obtained. While urethane group adhesives can be used as the adhesive, especially if a hot-melt type adhesive is employed, there is a merit that the degree of curving can be rectified later by heating.

According to the present invention, a curved slide fastener can be simply produced by mounting the respective parts such as a slider, upper stops and lower stops to the curved slide fastener chain produced through the above-described respective methods, or by applying the above-described respective methods to the existing slide fastener.

With regard to the solvent applied onto the fastener tape, while any solvent can be used so long as it can swell the fiber yarns in the fastener tape, a solvent which does not result in deterioration, degradation of mechanical strength nor the like of the fibers is favorable. Practically, alcohols such as methyl alcohol, ethyl alcohol, isopropyl alcohol, etc., ketones such as acetone, methyl-ethyl ketone, etc., ethers such as diethyl ether or the like, a hydrocarbon group solvent such as n-hexane, petroleum ether or the like, cyclic compounds such as toluene, xylene, aniline, tetrahydrofuran, etc., halogen compounds such as trichloroethane, chloroform, carbon tetrachloride, etc., fatty acids and their esters such as n-butylacetate, acetic acid, etc., and inorganic acids.

### [Preferred Embodiments]

In the following, the present invention will be described in more detail by presenting a number of preferred embodiment thereof as well as test examples.

### Preferred embodiments 1 to 9

Fastener elements were planted along one side edges of expansible tapes (presenting elongation of 10 % under loading of 410 g) of 20 mm in width and of 10 mm in width, respectively, woven of polyurethane fibers, the fastener elements on these paired expansible tapes were inter-engaged with each other, and thereby a fastener chain was produced. The total width of the produced fastener chain was 33 mm.

Subsequently, onto the tape portion of one tape of 20 mm in width of the above-described fastener chain were applied the respective kinds of solvents indicated in Table-1 by an appropriate amount (applied by a bush three times), and immediately thereafter, a chain bias was measured. The mode of measurement of the chain bias H_{L} is as shown in Fig. 2, in which L = 150 mm and t = 33 mm were measured. The test results are also indicated in TABLE 1.

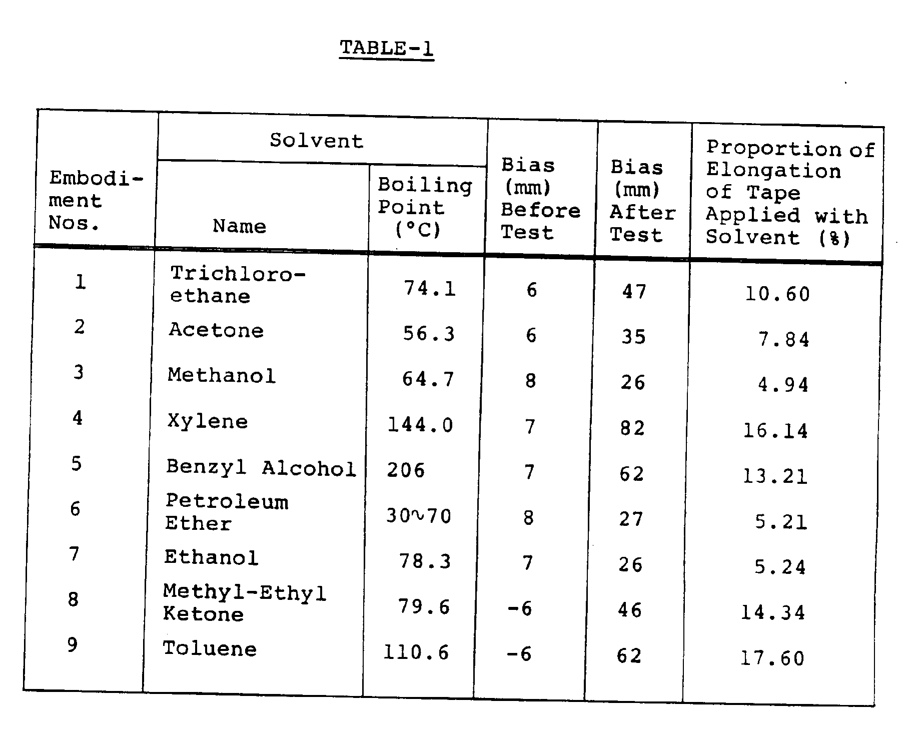

The obtained fastener chain was shaped by hands into a curved configuration, the configuration was fixed by sewing it onto a texture, or fixed by applying a polyurethane group adhesive, and thereby a curved slide fastener chain was produced.

As will be apparent from the results shown in TABLE-1 above, a proportion of elongation (a degree of expansion) of a tape is different depending upon the kind of the used solvent. Accordingly, by appropriately selecting a solvent to be used, the configuration can be adjusted to a desired degree of curve.

### Test Example 1

With respect to a sole tape itself, influence by immersing it in a solvent was investigated. At first, a weight of initial loading of 15 g is put to the elastic tape preliminarily used in the above-described embodiments, and an interval of 20 cm at that movement is measured.

Next, it is immersed for 30 seconds in the respective kinds of solvent shown in TABLE-1, and after it has been dried by airflow for 90 seconds, starting from 2 minutes after the drying, proportions of elongation up to 12 minutes after at an interval of 2 minutes and at 20 minutes after are measured. The results are shown in TABLE-2.

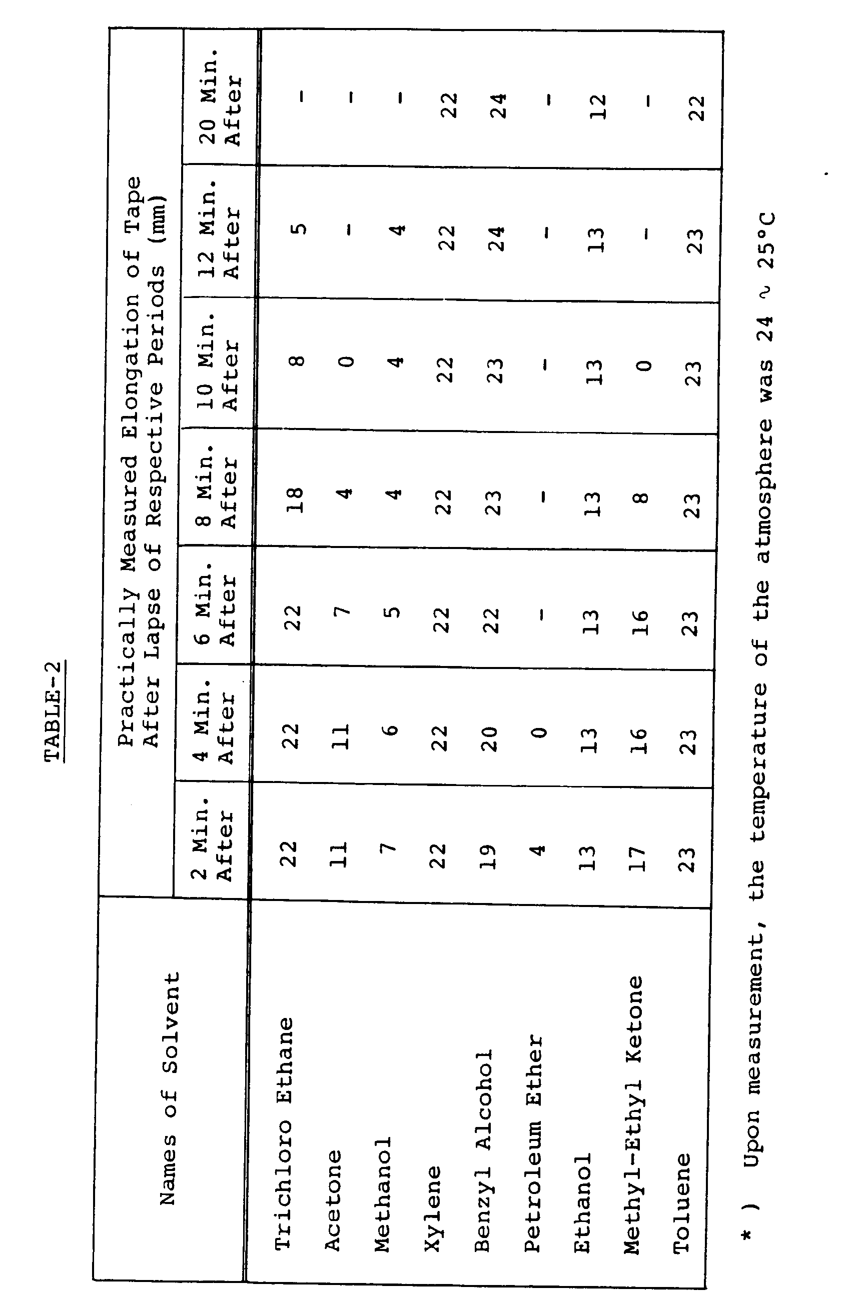

From the above results, it is seen that depending upon the kind of solvent, there are differences in the influent upon strength of a tape, and in the evaporation speed of the solvent. It is to be noted that in any case, discoloration of a tape caused by immersion in a solvent was not observed.

### Preferred Embodiment 10

As materials of the used tapes, those shown in TABLE-3 were employed, and except for the use of the respective solvents shown in TABLE-4, fastener chains were produced in a similar manner to the above-described embodiments and a chain bias was measured in a similar manner. The results are also shown in TABLE-4. With regard to the influence of immersion in a solvent upon a sole tape itself, also investigation was made exactly in the same manner as the above-described Test Example 1. The results are shown in TABLE-5.

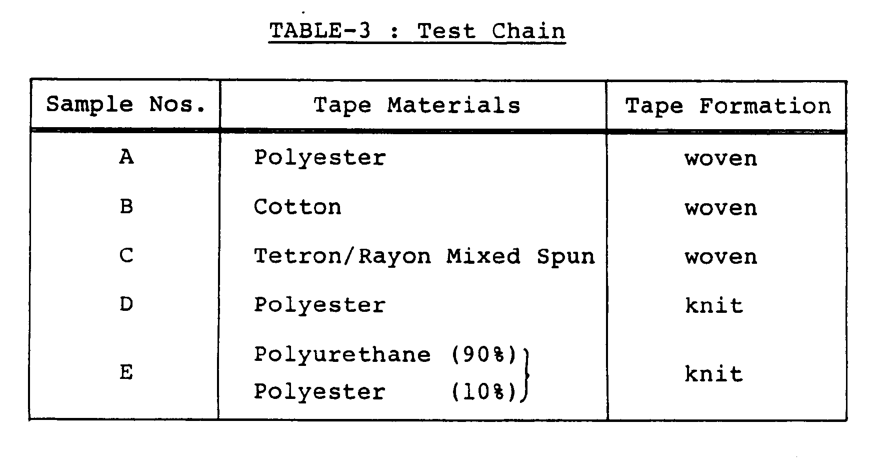

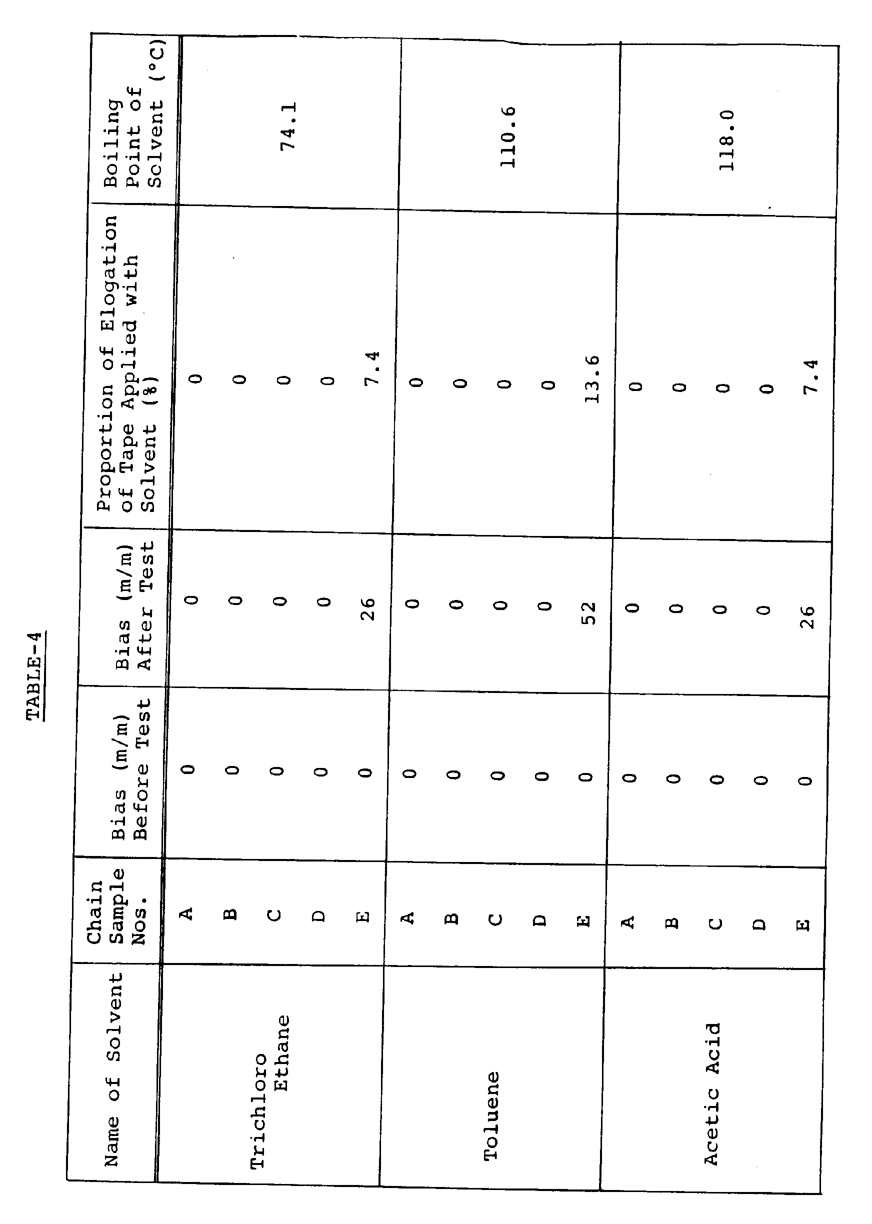

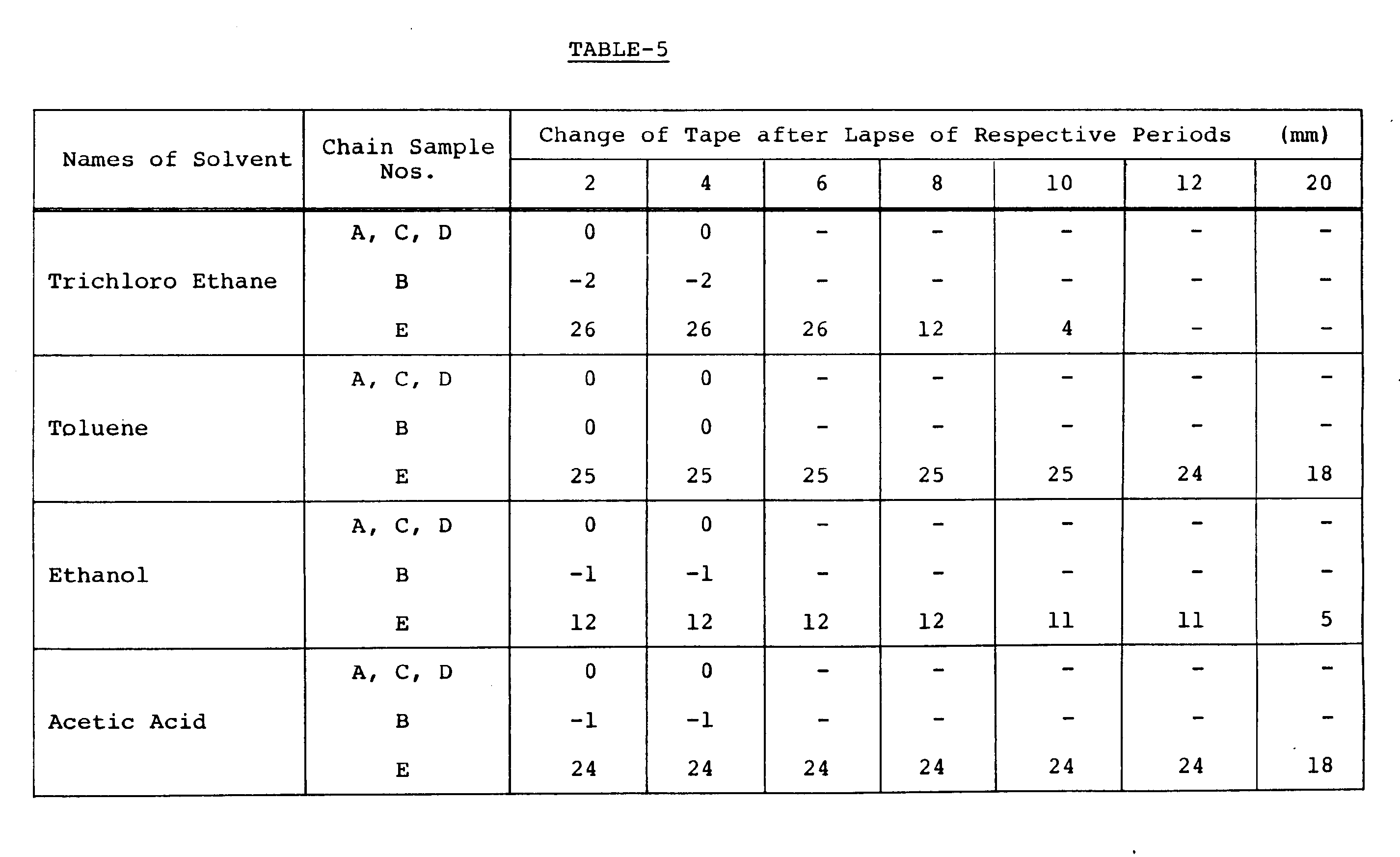

As will be apparent from the results shown in TABLE-4 and TABLE-5 above, the present invention is applicable in the case of tapes made of solvent-swelling fibers such as polyurethane fibers.

As described above, in the method of producing curved slide fastener chains according to the present invention, since solvent is applied onto at least one of a pair of fastener tapes made of solvent-swelling fibers and by making use of the property that the one fastener tape applied with the solvent is swelled by the solvent and expands the fastener chain is shaped into a curved configuration and fixed in that configuration, curved slide fastener chains as well as curved slide fasteners can be produced in an extremely simple manner, sewing of the curved portion is easy, hence their finishment is also improved, and the size of the curve can be arbitrarily adjusted by appropriately changing the kind and the applied amount of the solvent.

In addition, the present invention is in itself applicable to a warp-stretching slide fastener that is already existing as a known item at present, and by spraying or otherwise applying a solvent thereto upon sewing, a curved slide fastener can be sewed with a freely adjustable degree of curve on the spot.

Furthermore, by making use of an adhesive for the purpose of fixing of the configuration as claimed in appended Claims 2 and 3, a merit that a slide fastener chain or a slide fastener shaped into a desired curved configuration can be simply fixed at the curved state, can be obtained.

## Claims

1. A method of producing a curved slide fastener chain (1), comprising the steps of:- planting a plurality of fastener elements (4) along respective side edges of a pair of fastener tapes (2, 3); and inter-engaging the plurality of fastener elements (4) on the respective tapes (2, 3) with each other to form a slide fastener chain (1);
said method being characterised in that at least one of said fastener tapes (2, 3) is made at least partly of solvent-swelling fibers; and in that it further comprises the steps of:-
applying a solvent or an aqueous solution containing a solvent onto said fastener tape made at least partly from solvent-swelling fibers or onto one or both of said fastener tapes (2, 3) made at least partly from solvent-swelling fibers;
shaping said slide fastener chain (1) into a curved configuration; and
sewing the curved slide fastener chain (1) onto a textile material (5).

2. A method of producing a curved slide fastener chain (1), comprising the steps of:- planting a plurality of fastener elements (4) along respective side edges of a pair of fastener tapes (2, 3); and inter-engaging the plurality of fastener elements (4) on the respective tapes (2, 3) with each other to form a slide fastener chain (1);
said method being characterised in that at least one of said fastener tapes (2, 3) is made at least partly of solvent-swelling fibers; in that it further comprises the steps of:-
applying a solvent or an aqueous solution containing a solvent onto said fastener tape made at least partly from solvent-swelling fibers or onto one or both of said fastener tapes (2, 3) made at least partly from solvent-swelling fibers;
shaping said slide fastener chain (1) into a curved configuration;
and in that an adhesive is dissolved in said solvent or said aqueous solution containing a solvent.

3. A method of producing a curved slide fastener chain (1), comprising the steps of:- planting a plurality of fastener elements (4) along respective side edges of a pair of fastener tapes (2, 3); and inter-engaging the plurality of fastener elements (4) on the respective tapes (2, 3) with each other to form a slide fastener chain (1);
said method being characterised in that at least one of said fastener tapes (2, 3) is made at least partly of solvent-swelling fibers; and in that it further comprises the steps of:-
applying a solvent or an aqueous solution containing a solvent onto said fastener tape made at least partly from solvent-swelling fibers or onto one or both of said fastener tapes (2, 3) made at least partly from solvent-swelling fibers;
shaping said slide fastener chain (1) into a curved configuration; and
applying an adhesive onto at least one of said fastener tapes (2, 3) once said slide fastener chain (1) has been shaped into said curved configuration.

4. A method of producing a curved slide fastener, comprising the steps of:- planting a plurality of fastener elements (4) along respective side edges of a pair of fastener tapes (2, 3); inter-engaging the plurality of fastener elements (4) on the respective tapes (2, 3) with each other to form a slide fastener chain (1); and mounting a slider and one or more upper and/or lower stops on the slide fastener chain (1) so as to form a slide fastener having a predetermined length;
said method being characterised in that at least one of said fastener tapes (2, 3) is made at least partly of solvent-swelling fibers; and in that it further comprises the steps of:-
applying a solvent or an aqueous solution containing a solvent onto said fastener tape made at least partly of solvent-swelling fibers or onto one or both of said fastener tapes (2, 3) made at least partly of solvent-swelling fibers;
shaping said slide fastener into a curved configuration; and
sewing the curved slide fastener onto a textile material (5).

5. A method of producing a curved slide fastener, comprising the steps of:- planting a plurality of fastener elements (4) along respective side edges of a pair of fastener tapes (2, 3); inter-engaging the plurality of fastener elements (4) on the respective tapes (2, 3) with each other to form a slide fastener chain (1); and mounting a slider and one or more upper and/or lower stops on the slide fastener chain (1) so as to form a slide fastener having a predetermined length;
said method being characterised in that at least one of said fastener tapes (2, 3) is made at least partly of solvent-swelling fibers; in that it further comprises the steps of:-
applying a solvent or an aqueous solution containing a solvent onto said fastener tape made at least partly of solvent-swelling fibers or onto one or both of said fastener tapes (2, 3) made at least partly of solvent-swelling fibers;
shaping said slide fastener into a curved configuration; and
sewing the curved slide fastener onto a textile material (5);
and in that an adhesive is dissolved in said solvent or said aqueous solution.

6. A method of producing a curved slide fastener, comprising the steps of:- planting a plurality of fastener elements (4) along respective side edges of a pair of fastener tapes (2, 3); inter-engaging the plurality of fastener elements (4) on the respective tapes (2, 3) with each other to form a slide fastener chain (1); and mounting a slider and one or more upper and/or lower stops on the slide fastener chain (1) so as to form a slide fastener having a predetermined length;
said method being characterised in that at least one of said fastener tapes (2, 3) is made at least partly of solvent-swelling fibers; and in that it further comprises the steps of:-
applying a solvent or an aqueous solution containing a solvent onto said fastener tape made at least partly of solvent-swelling fibers or onto one or both of said fastener tapes (2, 3) made at least partly of solvent-swelling fibers;
shaping said slide fastener into a curved configuration;
sewing the curved slide fastener onto a textile material (5); and
applying an adhesive onto at least one of said fastener tapes (2, 3) once said slide fastener has been shaped into said curved configuration.

7. A method of producing a curved slide fastener chain according to any of claims 1 to 3, wherein said solvent is at least one solvent selected from the group consisting of:- methyl alcohol, ethyl alcohol, isopropyl alcohol, benzyl alcohol, acetone, methyl-ethyl ketone, diethyl ether, n-hexane, petroleum ether, toluene, xylene, aniline, tetrahydrofuran, trichloroethane, chloroform, carbon tetrachloride, n-butylacetate and acetic acid.

8. A method of producing a curved slide fastener according to any of claims 4 to 6, wherein said solvent is at least one solvent selected from the group consisting of:- methyl alcohol, ethyl alcohol, isopropyl alcohol, benzyl alcohol, acetone, methyl-ethyl ketone, diethyl ether, n-hexane, petroleum ether, toluene, xylene, aniline, tetrahydrofuran, trichloroethane, chloroform, carbon tetrachloride, n-butylacetate and acetic acid.

## Patentansprüche

1. Verfahren zur Herstellung einer bogenförmigen Reißverschlußkette (1), umfassend die Schritte: Anbringen einer Vielzahl von Kuppelgliedern (4) längs der betreffenden Seitenränder zweier Reißverschlußbänder (2, 3); und Kuppeln der Vielzahl von Kuppelgliedern (4) an den betreffenden Tragbändern (2, 3) miteinander, um eine Reißverschlußkette (1) zu bilden;
dadurch **gekennzeichnet**, daß mindestens eines der besagten Tragbänder zumindest teilweise aus mit einem Lösungsmittel aufquellenden Fasern hergestellt ist; und daß es ferner die Schritte umfaßt:
Aufbringen eines Lösungsmittels oder einer ein Lösungsmittel enthaltenden wässrigen Lösung auf das besagte Tragband, das zumindest teilweise aus in einem Lösungsmittel aufquellenden Fasern hergestellt ist, oder auf eines oder beide besagte Tragbänder (2, 3), die zumindest teilweise aus in einem Lösungsmittel aufquellenden Fasern hergestellt sind;
Formen dieser Reißverschlußkette (1) in eine bogenförmige Gestalt; und
Annähen der bogenförmigen Reißverschlußkette (1) auf ein Textilmaterial (5).

2. Verfahren zur Herstellung einer bogenförmigen Reßverschlußkette (1), umfassend die Schritte: Anbringen einer Vielzahl von Kuppelgliedern (4) längs der betreffenden Seitenränder zweier Reißverschlußbänder (2, 3); und Kuppeln der Vielzahl von Kuppelgliedern (4) an den betreffenden Tragbändern (2, 3) miteinander, um eine Reißverschlußkette (1) zu bilden;
dadurch **gekennzeichnet**, daß mindestens eines der besagten Tragbänder zumindest teilweise aus mit einem Lösungsmittel aufquellenden Fasern hergestellt ist; und daß es ferner die Schritte umfaßt:
Aufbringen eines Lösungsmittels oder einer ein Lösungsmittel enthaltenden wässrigen Lösung auf das besagte Tragband, das zumindest teilweise aus in einem Lösungsmittel aufquellenden Fasern hergestellt ist, oder auf eines oder beide besagte Tragbänder (2, 3), die zumindest teilweise aus in einem Lösungsmittel aufquellenden Fasern hergestellt sind;
Formen dieser Reißverschlußkette (1) in eine bogenförmige Gestalt;
und daß ein Klebstoff in dem besagten Lösungsmittel oder in der ein Lösungsmittel enthaltenden besagten wässrigen Lösung gelöst ist.

3. Verfahren zur Herstellung einer bogenförmigen Reißverschlußkette (1), umfassend die Schritte: Anbringen einer Vielzahl von Kuppelgliedern (4) längs der betreffenden Seitenränder zweier Reißverschlußbänder (2, 3); und Kuppeln der Vielzahl von Kuppelgliedern (4) an den betreffenden Tragbändern (2, 3) miteinander, um eine Reißverschlußkette (1) zu bilden;
dadurch **gekennzeichnet**, daß mindestens eines der besagten Tragbänder zumindest teilweise aus mit einem Lösungsmittel aufquellenden Fasern hergestellt ist; und daß es ferner die Schritte umfaßt:
Aufbringen eines Lösungsmittels oder einer ein Lösungsmittel enthaltenden wässrigen Lösung auf das besagte Tragband, das zumindest teilweise aus in einem Lösungsmittel aufquellenden Fasern hergestellt ist, oder auf eines oder beide besagte Tragbänder (2, 3), die zumindest teilweise aus in einem Lösungsmittel aufquellenden Fasern hergestellt sind;
Formen dieser Reißberschlußkette (1) in eine bogenförmige Gestalt; und
Aufbringen eines Klebstoffs auf mindestens eines der besagten Tragbänder (2, 3), nachdem die Reißverschlußkette (1) in die bogenförmige Gestalt gebracht worden ist.

4. Verfahren zur Herstellung eines bogenförmigen Reißverschlusses, umfassend die Schritte: Anbringen einer Vielzahl von Kuppelgliedern (4) längs der betreffenden Seitenränder zweier Reißverschlußbänder (2, 3); Kuppeln der Vielzahl von Kuppelgliedern (4) an den betreffenden Tragbändern (2, 3) miteinander, um eine Reißverschlußkette (1) zu bilden; und Anbringen eines Schiebers und eines oder mehrerer oberer und/oder unterer Begrenzungsteile an der Reißverschlußkette (1) zur Bildung eines Reißverschlusses mit bestimmter Länge;
dadurch **gekennzeichnet**, daß mindestens eines der besagten Tragbänder zumindest teilweise aus mit einem Lösungsmittel aufquellenden Fasern hergestellt ist; und daß es ferner die Schritte umfaßt:
Aufbringen eines Lösungsmittels oder einer ein Lösungsmittel enthaltenden wässrigen Lösung auf das besagte Tragband, das zumindest teilweise aus in einem Lösungsmittel aufquellenden Fasern hergestellt ist, oder auf eines oder beide besagte Tragbänder (2, 3), die zumindest teilweise aus in einem Lösungsmittel aufquellenden Fasern hergestellt sind;
Formen dieser Reißverschlußkette (1) in eine bogenförmige Gestalt; und
Annähen des bogenförmigen Reißverschlusses auf ein Textilmaterial (5).

5. Verfahren zur Herstellung eines bogenförmigen Reißverschlusses, umfassend die Schritte: Anbringen einer Vielzahl von Kuppelgliedern (4) längs der betreffenden Seitenränder zweier Reißverschlußbänder (2, 3); Kuppeln der Vielzahl von Kuppelgliedern (4) an den betreffenden Tragbändern (2, 3) miteinander, um eine Reißverschlußkette (1) zu bilden; und Anbringen eines Schiebers und eines oder mehrerer oberer und/oder unterer Begrenzungsteile an der Reißverschlußkette (1) zur Bildung eines Reißverschlusses mit bestimmter Länge;
dadurch **gekennzeichnet**, daß mindestens eines der besagten Tragbänder zumindest teilweise aus mit einem Lösungsmittel aufquellenden Fasern hergestellt ist; und daß es ferner die Schritte umfaßt:
Aufbringen eines Lösungsmittels oder einer ein Lösungsmittel enthaltenden wässrigen Lösung auf das besagte Tragband, das zumindest teilweise aus in einem Lösungsmittel aufquellenden Fasern hergestellt ist, oder auf eines oder beide besagte Tragbänder (2, 3), die zumindest teilweise aus in einem Lösungsmittel aufquellenden Fasern hergestellt sind;
Formen dieser Reißverschlußkette (1) in eine bogenförmige Gestalt; und
Annähen des bogenförmigen Reißverschlusses auf ein Textilmaterial (5);
und daß ein Klebstoff in dem besagten Lösungsmittel oder in der besagten wässrigen Lösung gelöst ist.

6. Verfahren zur Herstellung eines bogenförmigen Reißverschlusses, umfassend die Schritte: Anbringen einer Vielzahl von Kuppelgliedern (4) längs der betreffenden Seitenränder zweier Reißverschlußbänder (2, 3); Kuppeln der Vielzahl von Kuppelgliedern (4) an den betreffenden Tragbändern (2, 3) miteinander, um eine Reißverschlußkette (1) zu bilden; und Anbringen eines Schiebers und eines oder mehrerer oberer und/oder unterer Begrenzungsteile an der Reißverschlußkette (1) zur Bildung eines Reißverschlusses mit bestimmter Länge;
dadurch **gekennzeichnet**, daß mindestens eines der besagten Tragbänder zumindest teilweise aus mit einem Lösungsmittel aufquellenden Fasern hergestellt ist; und daß es ferner die Schritte umfaßt:
Aufbringen eines Lösungsmittels oder einer ein Lösungsmittel enthaltenden wässrigen Lösung auf das besagte Tragband, das zumindest teilweise aus in einem Lösungsmittel aufquellenden Fasern hergestellt ist, oder auf eines oder beide besagte Tragbänder (2, 3), die zumindest teilweise aus in einem Lösungsmittel aufquellenden Fasern hergestellt sind;
Formen dieser Reißverschlußkette (1) in eine bogenförmige Gestalt;
Annähen des bogenförmigen Reißverschlusses auf ein Textilmaterial (5); und
Anbringen eines Klebstoffs auf mindestens eines der besagten Tragbänder (2, 3), nachdem der Reißverschluß in die bogenförmige Gestalt gebracht worden ist.

7. Verfahren zur Herstellung einer bogenförmigen Reiverschlußkette nach einem der Ansprüche 1 bis 3, wobei das besagte Lösungsmittel mindestens ein aus folgender Gruppe ausgewähltes Lösungsmittel ist: Methylalkohol, Ethylalkohol, Isopropylalkohol, Benzylalkohol, Aceton, Methyl-Ethyl Keton, Diethyläther, n-Hexan, Petroleumäther, Toluol, Xylol, Anilin, Tetrahydrofuran, Trichlorethan, Chloroform, Kohlenstofftetrachlorid, n-Butylacetat und Essigsäure.

8. Verfahren zur Herstellung eines bogenförmigen Reißverschlusses nach einem der Ansprüche 4 bis 6, wobei das besagte Lösungsmittel mindestens ein aus folgender Gruppe ausgewähltes Lösungsmittel ist: Methylalkohol, Ethylalkohol, Isopropylalkohol, Benzylalkohol, Aceton, Methyl-Ethyl Keton, Diethyläther, n-Hexan, Petroleumäther, Toluol, Xylol, Anilin, Tetrahydrofuran, Trichlorethan, Chloroform, Kohlenstofftetrachlorid, n-Butylacetat und Essigsäure.

## Revendications

1. Procédé pour fabriquer une chaîne de fermeture à glissière courbe (1), comprenant les étapes consistant: à implanter une pluralité d'éléments d'accouplement (4) le long des bords latéraux respectifs d'une paire de rubans (2, 3) de fermeture à glissière et à accoupler mutuellement la pluralité d'éléments d'accouplement (4) se trouvant sur les rubans respectifs (2, 3) de manière à former une chaîne de fermeture à glissière (1);
le procédé susvisé étant caractérisé en ce qu'au moins un des rubans précités (2, 3) est formé au moins partiellement de fibres gonflant en présence d'un solvant ;
et en ce qu'il comprend, en outre, les étapes consistant : à appliquer un solvant ou une solution aqueuse contenant un solvant sur le ruban de fermeture à glissière formé au moins partiellement de fibres gonflant en présence d'un solvant ou sur un seul ou sur les deux rubans précités (2, 3) formés au moins partiellement de fibres gonflant en présence d'un solvant;
à mettre en forme la chaîne de fermeture à glissière (1) de manière à lui donner une configuration courbe; et
à coudre la chaîne de fermeture à glissière courbe (1) sur une matière textile (5).

2. Procédé pour fabriquer une chaîne de fermeture à glissière courbe (1), comprenant les étapes consistant :
à implanter une pluralité d'éléments d'accouplement (4) le long des bords latéraux respectifs d'une paire de rubans (2, 3) de fermeture à glissière; et à accoupler mutuellement la pluralité d'éléments d'accouplement (4) se trouvant sur les rubans respectifs (2, 3) de manière à former une chaîne de fermeture à glissière (1);
le procédé susvisé étant caractérisé en ce qu'au moins un seul desdits rubans (2, 31) de fermeture à glissière est formé au moins partiellement de fibres gonflant en présence d'un solvant;
en ce qu'il comprend, en outre, les étapes consistant : à appliquer un solvant ou une solution aqueuse contenant un solvant sur le ruban précité formé au moins partiellement de fibres gonflant en présence d'un solvant ou sur un seul ou sur les deux rubans précités (2, 3) formés au moins partiellement de fibres gonflant en présence d'un solvant;
à mettre en forme la chaîne de fermeture à glissière (1) de manière à lui donner une configuration courbe;
et en ce qu'un adhésif est dissous dans le solvant ou dans la solution aqueuse contenant un solvant.

3. Procédé pour fabriquer une chaîne de fermeture à glissière courbe (1), comprenant les étapes consistant: à implanter une pluralité d'éléments d'accouplement (4) le long des bords latéraux respectifs d'une paire de rubans (2, 3) de fermeture à glissière; et à accoupler mutuellement la pluralité d'éléments d'accouplement (4) se trouvant sur les rubans respectifs (2, 3) de manière à former une chaîne de fermeture de glissière (1);
le procédé susvisé étant caractérisé en ce qu'au moins un des rubans (2, 3) de fermeture à glissière est formé au moins partiellement de fibres gonflant en présence d'un solvant;
et en ce qu'il comprend, en outre, les étapes consistant :
à appliquer un solvant ou une solution aqueuse contenant un solvant sur le ruban précité formé au moins partiellement de fibres gonflant en présence d'un solvant ou sur un seul ou sur les deux rubans précités (2, 3) formés au moins partiellement de fibres gonflant en présence d'un solvant ;
à mettre en forme la chaîne de fermeture à glissière (1) de manière à lui donner une configuration courbe; et
à appliquer un adhésif sur au moins un des rubans précités (2, 3) une fois que la chaîne de fermeture à glissière (1) a été mise en forme et a pris la configuration courbe précitée.

4. Procédé pour fabriquer une fermeture à glissière comprenant les étapes consistant: à implanter une pluralité d'éléments d'accouplement (4) le long des bords latéraux respectifs d'une paire de rubans (2, 3) de fermeture à glissière; à accoupler mutuellement la pluralité d'éléments (4) de fermeture à glissière sur les rubans respectifs (2, 3) de manière à former une chaîne de fermeture à glissière (1); et à monter un curseur et une seule ou plusieurs butées supérieures et/ou inférieures sur la chaîne de fermeture à glissière (1) de manière à former une chaîne de fermeture à glissière ayant une longueur prédéterminée;
le procédé susvisé étant caractérisé en ce qu'au moins un des rubans précités (2, 3) est formé au moins partiellement de fibres gonflant en présence d'un solvant et en ce qu'il comprend, en outre, les étapes consistant :
à appliquer un solvant ou une solution aqueuse contenant un solvant sur le ruban précité formé au moins partiellement de fibres gonflant en présence d'un solvant ou sur un seul ou sur les deux rubans (2 ,3) formés au moins partiellement de fibres gonflant en présence d'un solvant;
à mettre en forme la fermeture à glissière de manière à lui donner une configuration courbe; et
à coudre la fermeture à glissière courbe sur une matière textile (5).

5. Procédé pour fabriquer une fermeture à glissière courbe comprenant les étapes consistant: à implanter une pluralité d'éléments d'accouplement (4) le long des bords latéraux respectifs d'une paire de rubans (2, 3) de fermeture à glissière; à accoupler mutuellement la pluralité d'éléments d'accouplement (4) se trouvant sur les rubans respectifs (2, 3) de manière à former une chaîne de fermeture à glissière (1) ; et à monter un curseur et une ou plusieurs butées supérieures et/ou inférieures sur la chaîne de fermeture à glissière (1) de manière former une fermeture à glissière ayant une longueur prédéterminée;
le procédé susvisé étant caractérisé en ce qu'au moins un des rubans précités (2, 3) est formé au moins partiellement de fibres gonflant en présence d'un solvant;
en ce qu'il comprend, en outre, les étapes consistant :
à appliquer un solvant ou une solution aqueuse contenant un solvant sur le ruban de fermeture à glissière formé au moins partiellement de fibres gonflant en présence d'un solvant ou sur un seul ou sur les deux rubans précités (2, 3) formé au moins partiellement de fibres gonflant en présence d'un solvant;
à mettre en forme la fermeture à glissière de manière à lui donner une configuration courbe; et
à coudre la fermeture à glissière courbe sur une matière textile (5);
et en ce qu'un adhésif est dissous dans le solvant ou dans la solution aqueuse.

6. Procédé pour fabriquer une fermeture à glissière courbe, comprenant les étapes consistant : à implanter une pluralité d'éléments d'accouplement (4) le long des bords latéraux respectifs d'une paire de rubans (2, 3) de fermeture à glissière; à accoupler mutuellement la pluralité d'éléments (4) se trouvant sur les rubans respectifs (2, 3) de manière à former une chaîne de fermeture à glissière (1); et à monter un curseur et une ou plusieurs butées supérieures et/ou inférieures sur la chaîne de fermeture à glissière (1) de manière à former une fermeture à glissière ayant une longueur prédéterminée;
le procédé susvisé étant caractérisé en ce qu'au moins un des rubans précités (2, 3) est formé au moins partiellement de fibres gonflant en présence d'un solvant; et en ce qu'il comprend, en outre, les étapes consistant:
à appliquer un solvant ou une solution aqueuse sur le ruban précité formé au moins partiellement de fibre gonflant en présence d'un solvant ou sur un seul ou sur les deux rubans précités (2, 3) formés au moins partiellement de fibres gonflant en présence d'un solvant;
à mettre en forme la fermeture à glissière de manière à lui donner une configuration courbe;
à coudre la fermeture à glissière courbe sur une matière textile ; et
à appliquer un adhésif sur au moins un des rubans précités (2, 3) une fois que la fermeture à glissière a été mise en forme de manière à prendre une configuration courbe.

7. Procédé pour fabriquer une chaîne de fermeture à glissière courbe selon l'une quelconque des revendications 1 à 3, dans lequel le solvant est au moins un solvant choisi parmi le groupe comprenant : l'alcool méthylique, l'alcool éthylique, l'alcool isopropylique, l'alcool benzylique, l'acétone, le méthyléthylcétone, le diéthyl-éther, le n-hexane, l'éther de pétrole, le toluène, le xylène, l'aniline, le tétrahydrofurane, le trichloroéthane, le chloroforme, le tétrachlorure de carbone, l'acétate de n-butyle et l'acide acétique.

8. Procédé pour fabriquer une fermeture à glissière courbe selon l'une quelconque des revendications 4 à 6, dans lequel le solvant est au moins un solvant choisi parmi le groupe comprenant : l'alcool méthylique, l'alcool éthylique, l'alcool isopropylique, l'alcool benzylique, l'acétone, le méthyléthylcétone, le diéthyléther, le n-hexane, l'éther de pétrole, le toluène, le xylène, l'aniline le tétrahydrofurane, le trichloroéthane, le chloroforme, le tétrachlorure de carbone, l'acétate de n-butyle et l'acide acétique.
